# EUROPÄISCHE PATENTSCHRIFT

(11) **EP 0 532 885 B1**
(45) Veröffentlichungstag und Bekanntmachung des Hinweises auf die Patenterteilung: **14.12.1994**
(21) Anmeldenummer: 92113358.3
(22) Anmeldetag: 05.08.1992
(51) Int. Cl.: F16L 5/02, H02G 3/22, A62C 2/06

(54) **Vorrichtung zur Brandabschottung einer Wandöffnung für die Durchführung von Leitungen**
Fire barrier device through a wall opening for the penetration of conduits
Dispositif coupe-feu placé dans l'ouverture d'une paroi pour la traversée de conduits

(30) Priorität: 19.09.1991 DE 4131147
(43) Veröffentlichungstag der Anmeldung: 24.03.1993
(73) Patentinhaber: Hauff, Werner, D-89561 Dischingen (DE)
(72) Erfinder: Hauff, Werner, D-89561 Dischingen (DE)
(74) Vertreter: Fay, Hermann, Dipl.-Phys. Dr.

(56) Entgegenhaltungen:
- EP-A- 0 226 190
- EP-A- 0 360 004
- DE-U- 9 011 952

## Beschreibung

Die Erfindung betrifft eine Vorrichtung zur Brandabschottung einer Wandöffnung für die Durchführung von Leitungen, wie elektrische Kabel, Rohre oder dergl., durch eine Wand, mit einem abgedichtet gegen die Wand in der Wandöffnung angeordneten Schottkasten, der eine die Leitungen aufnehmende Durchführungsöffnung bildet und aus Intumeszenzmaterial bestehende Brandschutzplatten enthält, die erst im Brandfall ihr ursprüngliches Volumen unter der Wärmeeinwirkung vergrößern und dadurch die Durchführungsöffnung verschließen.

Vorrichtungen dieser Art besitzen den Vorteil, daß bis zum Brandfall die Durchführungsöffnung immer offen ist, und daß daher Änderungen oder Ergänzungen in der Leitungsbelegung der Durchführungsöffnung vorgenommen werden können, ohne daß es jedes Mal einer vorhergehenden Freilegung der Durchführungsöffnung durch Bohr- oder Stemmarbeiten bedarf. - Bei bekannten Vorrichtungen dieser Art (vgl. beispielsweise die DE-U-90 11 952 oder die Firmendruckschrift der ASEA Brown Boveri AG "Schottung von Wand- und Deckendurchbrüchen", ABB-ZST 31 (12.88 1000 HD), Seite 5) ist der Schottkasten ein auf beiden Seiten der Wand offener Blechkasten, dessen Wände innenseitig mit den Brandschutzplatten aus Intumeszenzmaterial ausgekleidet sind. Stirnseitig befinden sich am Schottkasten Polystyrol-Kappen, die mit passenden Öffnungen für die einzelnen Leitungen versehen und mit einem geeigneten dauerelastischen Dichtstoff gegen den Schottkasten und gegen die Leitungen verfugt werden müssen. Diese Kappen entfalten im Brandfall keine nennenswerte Brandschutzwirkung; sie dienen nur zum möglichst zug- und rauchdichten Verschluß der Durchführungsöffnung, so lange diese vor einem Brandfall durch das Intumeszenzmaterial noch nicht verschlossen ist. Eine Möglichkeit, die Leitungen auf einer Leitungspritsche durch die Durchführungsöffnung hindurchzuführen, besteht nicht, soll nicht im Brandfall der wirksame Verschluß der Durchführungsöffnung durch die Leitungspritsche gefährdet werden.

Der Erfindung liegt die Aufgabe zugrunde, die Feuerwiderstandsdauer einer Vorrichtung der eingangs genannten Art wesentlich zu verbessern und die Möglichkeit zu schaffen, die Leitungen auf einer Leitungspritsche durch die Wandöffnung hindurchzuführen.

Diese Aufgabe wird nach der Erfindung dadurch gelöst, daß die im wesentlichen parallel zu den Laibungsflächen der Wandöffnung angeordneten Brandschutzplatten zwischen sich und den Laibungsflächen geschlossene Hohlräume bilden, die durch Austrittsöffnungen in den Brandschutzplatten mit der Durchführungsöffnung in Verbindung stehen und ein flüssiges und/oder ein gasförmiges Brandschutzmittel enthalten, das im Brandfall noch vor dem Aufschäumen der Brandschutzplatten durch die Austrittsöffnungen in die Durchführungsöffnung eintritt.

Das noch vor dem Aufschäumen der Brandschutzplatten in die Durchführungsöffnung gelangende Brandschutzmittel bewirkt eine Kühlung des Schottkastens, der Brandschutzplatten und der Leitungen und verzögert dadurch das Aufschäumen der Brandschutzplatten. Insgesamt wird dadurch die Brandwiderstandsdauer erheblich vergrößert, und zwar um so mehr, je größere Mengen des Brandschutzmittels zur Verfügung stehen und je gleichmäßiger es sich über die Durchführungsöffnung, die Brandschutzplatten und die Leitungen verteilen und ausbreiten kann, so daß die Austrittsöffnungen möglichst über die gesamte Fläche der Brandschutzplatten verteilt sein sollten. Erst wenn die Kühl- und Löschwirkung des Brandschutzmittels im weiteren Verlauf des Brandgeschehens endet oder ungenügend wird, erfolgt durch die dann zunehmende weitere Erhitzung das Aufschäumen der Brandschutzplatten und damit der Verschluß der Durchführungsöffnung.

Eine bevorzugte Ausführungsform der Erfindung ist dadurch gekennzeichnet, daß die Brandschutzplatten die beiden seitlichen Begrenzungswände und die obere Begrenzungswand der Durchführungsöffnung bilden und zwischen sich einerseits und den entsprechenden Wänden des Schottkastens andererseits die Hohlräume einschließen.

Im Fall einer die Durchführungsöffnung durchsetzenden Leitungspritsche besteht dann die Möglichkeit, deren Boden unmittelbar gegen die untere Laibungsfläche der Wandöffnung abzudichten und im übrigen die Anordnung vorzugsweise so zu treffen, daß die Seitenwände der Leitungspritsche mit der jeweils benachbarten, die seitliche Begrenzungswand der Durchführungsöffnung bildenden Brandschutzplatte einen offenen Spaltraum bilden, in den ebenfalls Austrittsöffnungen der Brandschutzplatte münden. Das Brandschutzmittel kann dann durch den Spaltraum hindurch unmittelbar auch an die Leitungspritsche gelangen und diese kühlen.

Eine andere, im Fall einer die Wandöffnung durchsetzenden Leitungspritsche sehr vorteilhafte Ausführungsform ist dadurch gekennzeichnet, daß deren Boden- und Seitenwände im Bereich der Durchführungsöffnung unmittelbar ein Unterteil des Schottkastens bilden, das nach oben durch ein Kastenoberteil abgedeckt ist und daß die auf der Innenseite des Kastenunterteils wie des Kastenoberteiles vorgesehenen Brandschutzplatten zwischen sich und der jeweils entsprechenden Wand des Kastenunterteils bzw. des Kastenoberteils die Hohlräume einschließen. Im Ergebnis ist hier der Schottkasten mit der Leitungspritsche integriert. Soll dies vermieden werden, besteht im Fall einer die Wandöffnung durchsetzenden und mit ihren Boden- und Seitenwänden gegen die Wand abgedichteten Leitungspritsche die sehr zweckmäßige Möglichkeit, daß der Schottkasten aus einem in die Leitungspritsche eingesetzten und gegen deren Wände abgedichteten Kastenunterteil und einem die Leitungspritsche und das Kastenunterteil nach oben abdeckenden Kastenoberteil aufgebaut ist, und daß die auf der Innenseite des Kastenunterteils wie des Kastenoberteils vorgesehenen Brandschutzplatten zwischen sich und der jeweils entsprechenden Wand des Kastenunterteils bzw. des Kastenoberteils die Hohlräume einschließen. Der Schottkasten ist dann ein von der Leitungspritsche getrenntes Teil und Leitungspritsche und Schottkasten können unabhängig voneinander montiert werden. Im übrigen empfiehlt es sich in beiden Fällen, daß die Boden- und die Seitenwände des Kastenunterteils zur Bildung der Hohlräume doppelwandig ausgebildet sind, wobei die innenseitigen Wände des Brandschutzplatten anliegen und mit den Austrittsöffnungen der Brandschutzplatten in Verbindung stehende Löcher aufweisen.

Ist in den Hohlräumen das Brandschutzmittel schon vor dem Eintritt eines Brandfalles ständig gespeichert, besitzen die Austrittsöffnungen zweckmäßigerweise Verschlüsse aus einem in der Wärme schmelzenden Material. Da sich diese Verschlüsse erst in der Brandhitze öffnen, verhindern sie ein vorzeitiges Austreten des Brandschutzmittels. Es besteht aber auch die Möglichkeit, daß außerhalb der Wandöffnung auf einer Seite oder beiden Seiten der Wand Zusatzbehältnisse für das Brandschutzmittel vorgesehen sind, die so mit den Hohlräumen in Verbindung stehen, daß das Brandschutzmittel aus den Zusatzbehältnissen in die Hohlräume nachströmen kann, wenn das Brandschutzmittel aus den Hohlräumen in die Durchführungsöffnung austritt. Es steht dann eine größere Menge an Brandschutzmittel zur Verfügung, ohne daß die Hohlräume selbst in der Wandöffnung entsprechend vergrößert werden müßten; die Hohlräume selbst brauchen also keine nennenswerte Speicherfunktion mehr zu erfüllen. Stattdessen oder ergänzend können die Hohlräume, gegebenenfalls die Zusatzbehältnisse, an Verbindungsleitungen angeschlossen sein, die mit einem Vorratsgefäß oder einem Versorgungsnetz für das Brandschutzmittel in Verbindung stehen, wodurch im Brandgeschehen besonders große Mengen des Brandschutzmittels verfügbar werden. Zweckmäßigerweise ist im Fall eines in die Leitungspritsche eingesetzten Kastenunterteils die an dessen Hohlräume angeschlossene Verbindungsleitung zusammen mit den die Durchführungsöffnung in der Leitungspritsche durchlaufenden Leitungen in der Leitungspritsche geführt. In diesem Zusammenhang empfiehlt es sich auch, die Hohlräume an die Zusatzbehältnisse oder die Verbindungsleitungen über Ventile anzuschließen, die durch Brandmelder steuerbar sind. Die vorerwähnten Schmelzverschlüsse der Austrittsöffnungen können sich dadurch erübrigen.

Nach einem weiteren Vorschlag der Erfindung ist in den Hohlräumen wenigstens eine Kammer vorgesehen, aus der durch eigene Austrittsöffnungen in der sie begrenzenden Brandschutzplatte hindurch ein gasförmiges Brandschutzmittel in die Durchführungsöffnung eingeblasen werden kann. Zweckmäßigerweise ist in der Kammer ein Gebläse zur Erzeugung der Gasströmung vorgesehen und der Gebläseantrieb von einem Rauchgasmelder steuerbar. Das gasförmige Brandschutzmittel kann Stickstoff oder Kohlendioxid sein. Mit seiner Hilfe kann in noch frühem Brandstadium auf einfache Weise auch eine Rauchgassperre verwirklicht werden, weil der erzeugte Gasstrom aus der Durchführungsöffnung hinaus nach außen gerichtet ist und dadurch den Durchtritt von Rauchgasen durch die noch offene Durchführungsöffnung hindurch verhindert. Für diesen Zweck geeignetes Gas kann dann auch einfach Luft sein, die beispielsweise auf der vom Brand abgewandten Seite der Wand angesaugt wird.

In einer weiteren vorteilhaften Ausbildung der Erfindung sind auf beiden Seiten der Wand in die Durchführungsöffnung hängende Schürzen aus einem die Wärme gut leitenden Werkstoff vorgesehen, die mit ihrem unteren freien Rand auf den Leitungen aufliegen und die Durchführungsöffnung in Leitungslängsrichtung nach außen abdecken. Zweckmäßigerweise tragen die Schürzen an ihrem unteren Rand zwischen die Leitungen fallende Fransen. Diese Schürzen bilden, besonders wenn sie aus Kupfergewebe bestehen, einen sehr wirksamen Flammschutz, und in einfacher Weise einen Schutz gegen Zug durch die Durchführungsöffnung hindurch, bilden also ebenfalls eine Rauchgassperre, schon bevor im Brandfall der Verschluß der Durchführungsöffnung erfolgt. Arbeiten zur Änderung der Leitungsbelegung werden durch die Schürzen nicht erschwert, zumal dann, wenn die Schürzen an den Stirnwänden gelenkig aufgehängt und dadurch nach außen und aufwärts verschwenkbar sind, in welcher Stellung die Schürzen beispielsweise am Schottkasten eingerastet werden können, damit sie aus dem Wege sind, während Belegungsarbeiten in der Durchführungsöffnung stattfinden.

Das Brandschutzmittel kann im einfachsten Fall Wasser sein. Besser aber besteht das Brandschutzmittel aus einer wäßrigen Schlemme eines feinkörnigen festen Intumeszenzmaterials. Aufgrund der Fließfähigkeit der Schlemme kann dann das feinkörnige Intumeszenzmaterial in alle Zwischenräume gelangen, die zwischen den Leitungen selbst, zwischen diesen und einer in der Durchführungsöffnung vorhandenen Leitungspritsche, sowie zwischen der Leitungspritsche und den Wänden der Durchführungsöffnung bestehen. Erst wenn die Kühl- und Löschwirkung des Wassers endet, beginnt mit den Brandschutzplatten auch das aus der Schlämme stammende feinkörnige Intumeszentzmaterial aufzuschäumen, sich zu verfestigen und die erwähnten Zwischenräume vollständig auszufüllen und zu verschließen. Das Brandschutzmittel kann im übrigen Aluminiumhydroxid Al(OH)₃ enthalten, das in der Brandhitze unter Wärmeaufnahme Wasser abspaltet und daher eine besonders hohe Kühlwirkung entfaltet. Die Menge an Intumeszenzmaterial kann im übrigen noch dadurch erhöht werden, daß in der Durchführungsöffnung zwischen den Leitungen verlaufende, lose oder fest mit den Brandschutzplatten verbundene Leisten aus Intumeszenzmaterial angeordnet sind.

Im folgenden wird die Erfindung an in der Zeichnung dargestellten Ausführungsbeispielen näher erläutert; es zeigen in schematischer Darstellung:
- Fig. 1: eine Abschottungsvorrichtung in einem senkrechten, in Leitungslängsrichtung verlaufenden Schnitt,
- Fig. 2: den Schnitt II-II in Fig. 1,
- Fig. 3: eine andere Ausführungsform der Abschottungsvorrichtung in einer der Fig. 1 entsprechenden Darstellung,
- Fig. 4: den Schnitt in Richtung IV-IV in Fig. 3,
- Fig. 5: eine nochmals andere Ausführungsform einer erfindungsgemäßen Abschottungsvorrichtung, wieder in einer den Fig. 1 und 3 entsprechenden Darstellung, und
- Fig. 6: den Schnitt VI-VI in Fig. 5.

Die in der Zeichnung dargestellten Vorrichtungen dienen zur Brandabschottung einer Wandöffnung 2 für die Durchführung von im einzelnen nicht dargestellten, nur durch die gestrichelte Line 1 angedeuteten Leitungen, wie elektrische Kabel, Rohre oder dergl., durch eine Wand 3. Die Vorrichtung umfaßt einen in der Wandöffnung 2 angeordneten Schottkasten 4. Soweit der Schottkasten 4 unmittelbar den Laibungsflächen der Wandöffnung 2 anliegt, ist zwischen ihm und der Wand 3 eine Abdichtung 5 aus Brandschutzschaum vorgesehen. Der Schottkasten 4 bildet eine Durchführungsöffnung 7 für die Leitungen, die auf einer Leitungspritsche 8 liegen, welche die Durchführungsöffnung 7 durchsetzt.

Außerdem enthält der Schottkasten 4 aus Intumeszenzmaterial bestehende Brandschutzplatten 9, wobei das Intumeszenzmaterial die Eigenschaft besitzt, in der Wärme des Brandfalls unter erheblicher Volumenvergrößerung aufzuschäumen und sich in der aufgeschäumten Form wieder zu verfestigen, wobei es die Durchführungsöffnung 7 im Brandfall verschließt. Diese Brandschutzplatten 9 sind im wesentlichen parallel zu den Laibungsflächen der Wandöffnung 2 angeordnet und bilden zwischen sich einerseits und diesen Laibungsflächen andererseits geschlossene Hohlräume 10, die durch Austrittsöffnungen 11 in den Brandschutzplatten 9 mit der Durchführungsöffnung 7 in Verbindung stehen. Die Hohlräume 10 dienen dazu, ein flüssiges oder gasförmiges Brandschutzmittel entweder schon vor Beginn eines Brandfalles zu speichern oder mit einem solchen Brandschutzmittel erst im Brandfall beschickt zu werden, so daß das Brandschutzmittel noch vor dem Aufschäumen der Brandschutzplatten 9 durch die Austrittsöffnungen 11 in die Durchführungsöffnung 7 eintreten und die Brandschutzplatten 9 selbst, die Leitungspritsche 8 und die in ihr verlaufenden Leitungen kühlen kann, wodurch die Brandwiderstandsdauer der Vorrichtung insgesamt erheblich verlängert wird.

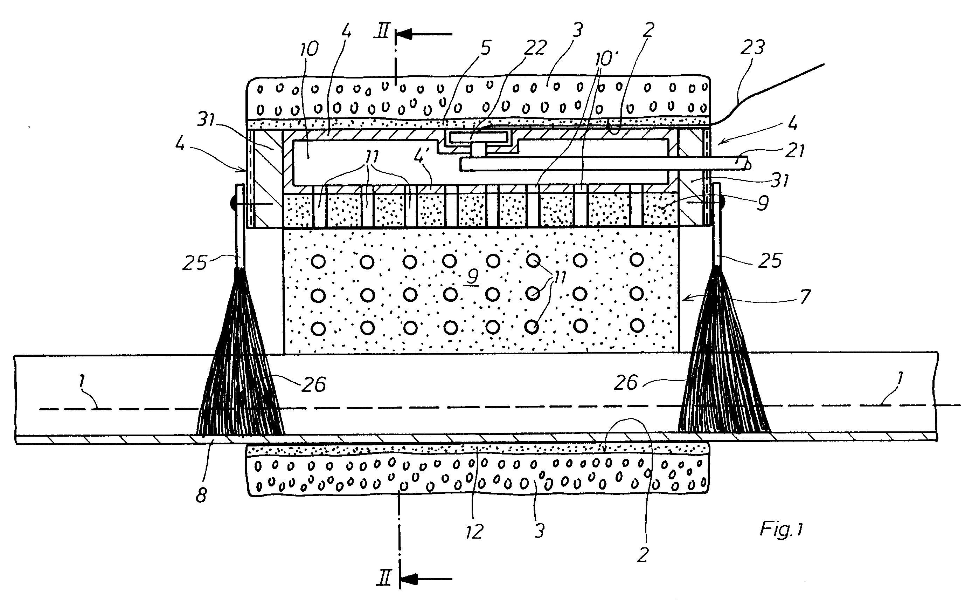

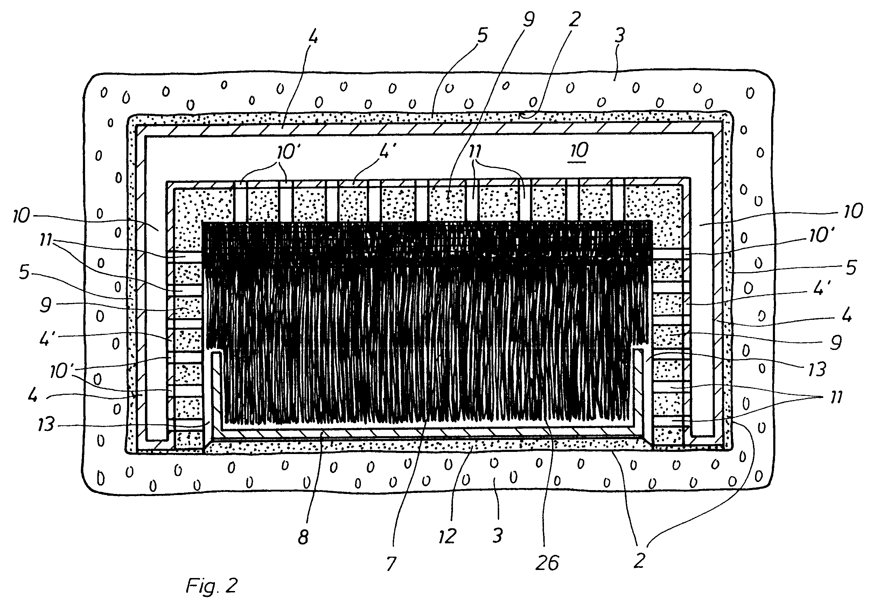

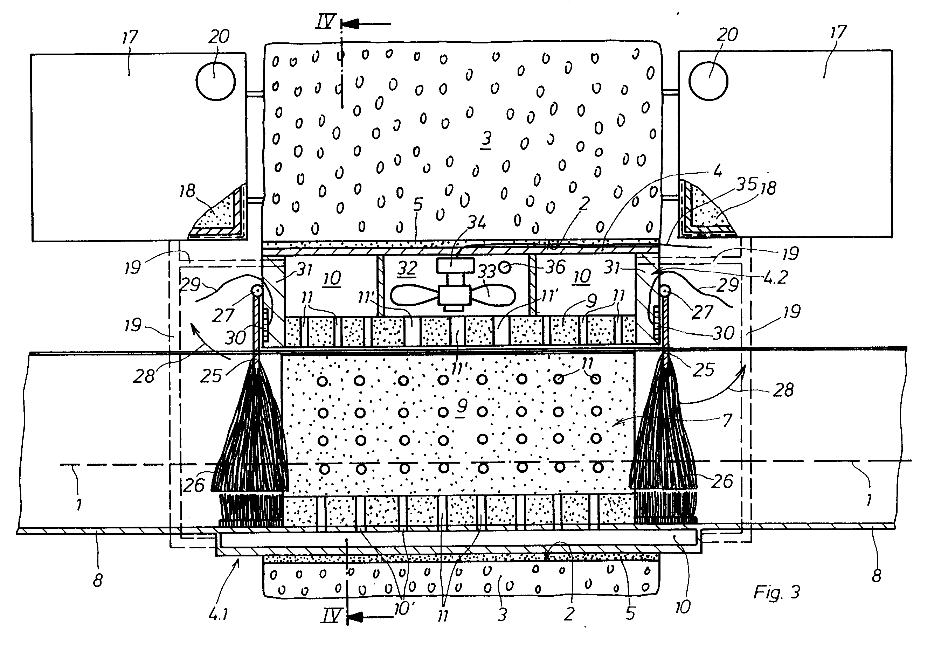

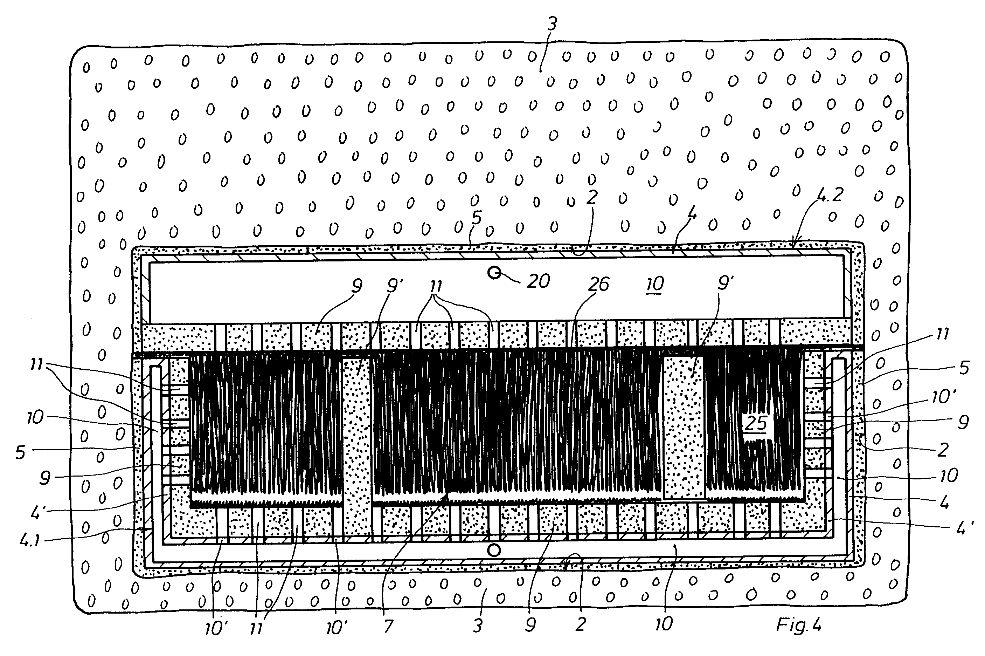

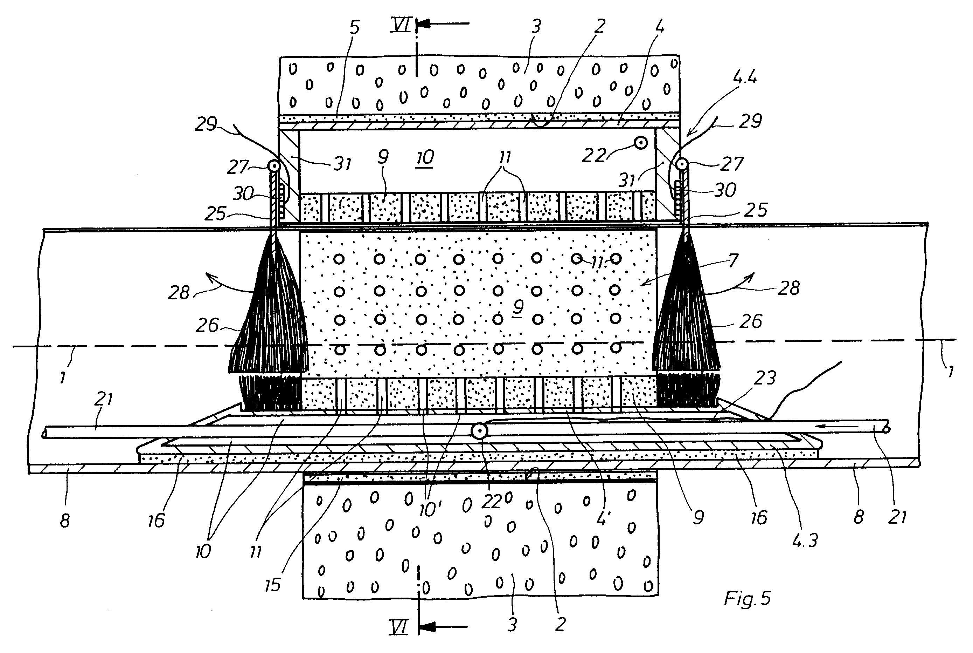

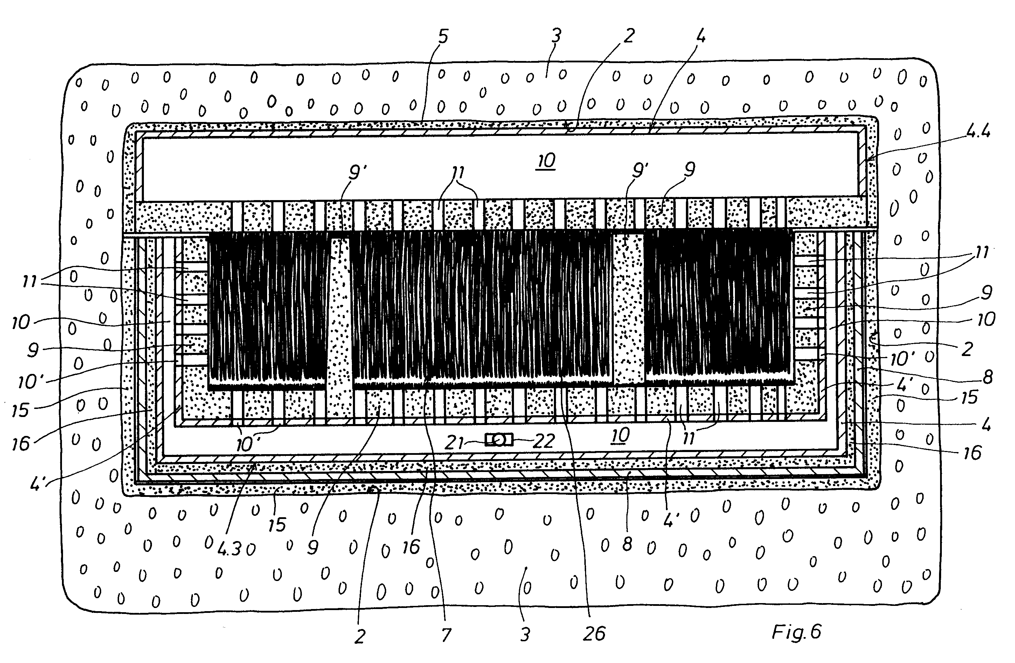

In den Ausführungsbeispielen bilden die Brandschutzplatten 9 zumindest die beiden seitlichen Begrenzungswände und die obere Begrenzungswand der Durchführungsöffnung 7. Zwischen den Brandschutzplatten 9 und den entsprechenden Wänden des Schottkastens 4 befinden sich die Hohlräume 10. Dabei sind im Ausführungsbeispiel nach den Fig. 1 und 2 die Seitenwände und die obere Wand des Schottkastens 4 doppelwandig ausgebildet. Den innenseitigen Wänden 4' des Schottkastens 4 liegen die Brandschutzplatten 9 unmittelbar an. Außerdem sind diese innenseitigen Wände 4' mit Löchern 10' versehen, die mit den Austrittsöffnungen 11 der Brandschutzplatten 9 in Verbindung stehen. Die Leitungspritsche 8 ist am Pritschenboden gegen die untere Laibungsfläche der Wand 3 mit einer Schicht 12 aus einem Brandschutzschaum abgedichtet. Die Seitenwände der Leitungspritsche 8 bilden mit der jeweils benachbarten, die seitliche Begrenzungswand der Durchführungsöffnung 7 bildenden Brandschutzplatte 9 einen offenen Spaltraum 13, in den ebenfalls Austrittsöffnungen 11 der Brandschutzplatte 9 münden. - Im Ausführungsbeispiel nach den Fig. 3 und 4 bilden die Bodenwand und die Seitenwände der Leitungspritsche 8 im Bereich der Durchführungsöffnung 7 unmittelbar ein Unterteil 4.1 des Schottkastens 4, das nach oben durch ein Kastenoberteil 4.2 abgedeckt ist. Die auf der Innenseite des Kastenunterteils 4.1 wie des Kastenoberteils 4.2 vorgesehenen Brandschutzplatten 9 schließen zwischen sich und der jeweils entsprechenden Wand des Kastenunterteils 4.1 bzw. des Kastenoberteils 4.2 die Hohlräume 10 ein. - Im Ausführungsbeispiel nach den Fig. 5 und 6 ist dagegen die Leitungspritsche mit ihrer Bodenwand und ihren Seitenwänden gegen die Wand wiederum mit einer Brandschutzschaumschicht 15 abgedichtet. Der Schottkasten 4 besteht aus einem in die Leitungspritsche 8 eingesetzten und gegen deren Wände mit einer Schaumschicht 16 abgedichteten Kastenunterteil 4.3 und einem die Leitungspritsche 8 und das Kastenunterteil 4.3 nach oben abdeckenden Kastenoberteil 4.4. Die auf der Innenseite des Kastenunterteils 4.3 wie des Kastenoberteils 4.4 vorgesehenen Brandschutzplatten 9 schließen wiederum zwischen sich einerseits und der jeweils entsprechenden Wand des Kastenunterteils 4.3 bzw. des Kastenoberteils 4.4 die Hohlräume 10 ein. Auch in diesen beiden Ausführungsbeispielen sind die Boden- und die Seitenwände des Kastenunterteils 4.3 zur Bildung der Hohlräume 10 doppelwandig ausgebildet, wobei die Brandschutzplatten 9 wiederum unmittelbar an den innenseitigen Wänden des Schottkastens 4 anliegen und diese innenseitigen Wände mit den Austrittsöffnungen 11 der Brandschutzplatten 9 in Verbindung stehende Löcher 10' aufweisen.

Im Ausführungsbeispiel nach den Fig. 3 und 4 sind außerhalb der Wandöffnung 2 auf beiden Seiten der Wand 3 Zusatzbehältnisse 17 für das Brandschutzmittel 18 vorgesehen. Diese Zusatzbehältnisse 17 stehen über in Fig. 3 gestrichelt angedeutete Leitungen 19 derart mit den Hohlräumen 10 in Verbindung, daß das Brandschutzmittel aus den Zusatzbehältnissen in die Hohlräume 10 nachströmen kann, wenn das Brandschutzmittel aus den Hohlräumen 10 durch die Austrittsöffnungen 11 in die Durchführungsöffnung 7 eintritt. Die Hohlräume 10, gegebenenfalls die Zusatzbehältnisse 17, können über, z.T. jeweils nur mit ihren Mündungen 20 in die Hohlräume 10 bzw. Zusatzbehältnisse 17 wiedergegebene, Verbindungsleitungen 21 an in der Zeichnung nicht dargestellte Vorratsgefäße oder an ein Versorgungsnetz für das Brandschutzmittel angeschlossen sein. Im Fall des Ausführungsbeispiels nach den Fig. 5 und 6 verläuft diese Verbindungsleitung 21 in der Leitungspritsche 8. Die Hohlräume 10 können an die Zusatzbehältnisse 17 oder die Verbindungsleitungen 21 über lediglich in Fig. 1, 5 und 6 angedeutete Ventile 22 angeschlossen sein, die durch nicht dargestellte Brandmelder über Leitungen 23 steuerbar sind. Im übrigen sind auf beiden Seiten der Wand 3 in die Durchführungsöffnung 7 hängende Schürzen 25 aus einem die Wärme gut leitenden Werkstoff, nämlich einem Kupferdrahtgewebe, vorgesehen. Die Schürzen 25 tragen an ihrem unteren Rand zwischen die Leitungen fallende Fransen 26 und decken die Durchführungsöffnung 7 in Leitungslängsrichtung nach außen ab. Im Ausführungsbeispiel nach den Fig. 3 bis 6 sind die Schürzen 25 am oberen Rand bei 27 gelenkig aufgehängt und dadurch nach außen und aufwärts in Richtung der Pfeile 28 verschwenkbar, so daß sie aus dem Querschnitt der Kabelpritsche 8 hochgeklappt werden können, wenn Belegungsarbeiten in der Durchführungsöffnung 7 durchgeführt werden müssen. Um die Schürzen 25 in ihrer herabhängenden Lage gegen in der Durchführungsöffnung 7 u. U. sich aufbauenden Überdruck festzuhalten, sind am Schottkasten 4 über Leitungen 29 ein- und ausschaltbare Elektromagnete 30 an untrennbaren harten Calcium-Silikat-Platten 31 angeordnet. Im übrigen zeigt Fig. 3, daß im oberen Hohlraum 10 eine Kammer 32 ausgebildet ist, aus der durch eigene Austrittsöffnungen 11' in der sie begrenzenden Brandschutzplatte 9 hindurch ein gasförmiges Brandschutzmittel, insbesondere Luft, in die Durchführungsöffnung 7 eingeblasen werden kann. In der Kammer 32 befindet sich ein Gebläse 33 zur Erzeugung der Gasströmung, wobei der Gebläsemotor 34 über eine Leitung 35 durch einen in der Zeichnung nicht dargestellten Rauchgasmelder gesteuert werden kann. Die Luft kann der Kammer 32 aus einer wiederum nur mit ihrer Mündung 36 angedeuteten Versorgungsleitung zugeführt werden. Im übrigen zeigen die Fig. 4 und 6 die Möglichkeit, in der Durchführungsöffnung 7 zwischen den Leitungen verlaufende, lose oder fest mit den Brandschutzplatten 9 verbundene Leisten 9' aus Intumeszenzmaterial anzuordnen, um mit Hilfe dieser Leisten 9' die Menge des Intumeszenzmaterials, falls erforderlich noch zu vergrößern.

## Patentansprüche

1. Vorrichtung zur Brandabschottung einer Wandöffnung (2) für die Durchführung von Leitungen, wie elektrische Kabel, Rohre oder dergl., durch eine Wand (3), mit einem abgedichtet gegen die Wand (3) in der Wandöffnung (2) angeordneten Schottkasten (4), der eine die Leitungen aufnehmende Durchführungsöffnung (7) bildet und aus Intumeszenzmaterial bestehende Brandschutzplatten (9) enthält, die erst im Brandfall ihr ursprüngliches Volumen unter der Wärmeeinwirkung vergrößern und dadurch die Durchführungsöffnung (7) verschließen, dadurch gekennzeichnet, daß die im wesentlichen parallel zu den Laibungsflächen der Wandöffnung (2) angeordneten Brandschutzplatten (9) zwischen sich und den Laibungsflächen geschlossene Hohlräume (10) bilden, die durch Austrittsöffnungen (11) in den Brandschutzplatten (9) mit der Durchführungsöffnung (7) in Verbindung stehen und ein flüssiges und/oder ein gasförmiges Brandschutzmittel enthalten, das im Brandfall noch vor dem Aufschäumen der Brandschutzplatten (9) durch die Austrittsöffnungen (11) in die Durchführungsöffnung (7) eintritt.

2. Vorrichtung nach Anspruch 1, dadurch gekennzeichnet, daß die Brandschutzplatten (9) die beiden seitlichen Begrenzungswände und die obere Begrenzungswand der Durchführungsöffnung (7) bilden und zwischen sich und den entsprechenden Wänden des Schottkastens (4) die Hohlräume (10) einschließen.

3. Vorrichtung nach Anspruch 2, dadurch gekennzeichnet, daß im Fall einer die Durchführungsöffnung (7) durchsetzenden Leitungspritsche (8) deren Seitenwände mit der jeweils benachbarten, die seitliche Begrenzungswand der Durchführungsöffnung (7) bildenden Brandschutzplatte (9) einen offenen Spaltraum (13) bilden, in den ebenfalls Austrittsöffnungen (11) der Brandschutzplatte (9) münden.

4. Vorrichtung nach Anspruch 1, dadurch gekennzeichnet, daß im Fall einer die Wandöffnung (2) durchsetzenden Leitungspritsche (8) deren Boden- und Seitenwände im Bereich der Durchführungsöffnung (7) unmittelbar ein Unterteil (4.1) des Schottkastens (4) bilden, das nach oben durch ein Kastenoberteil (4.2) abgedeckt ist, und daß die auf der Innenseite des Kastenunterteils (4.1) wie des Kastenoberteils (4.2) vorgesehenen Brandschutzplatten (9) zwischen sich und der jeweils entsprechenden Wand des Kastenunterteils (4.1) bzw. des Kastenoberteils (4.2) die Hohlräume einschließen.

5. Vorrichtung nach Anspruch 1, dadurch gekennzeichnet, daß im Fall einer die Wandöffnung (2) durchsetzenden und mit ihren Boden- und Seitenwänden gegen die Wand (3) abgedichteten Leitungspritsche (8) der Schottkasten (4) aus einem in die Leitungspritsche (8) eingesetzten und gegen deren Wände abgedichteten Kastenunterteil (4.3) und einem die Leitungspritsche (8) und das Kastenunterteil (4.3) nach oben abdeckenden Kastenoberteil (4.4) besteht, und daß die auf der Innenseite des Kastenunterteils (4.3) wie des Kastenoberteils (4.4) vorgesehenen Brandschutzplatten (9) zwischen sich und der jeweils entsprechenden Wand des Kastenunterteils (4.3) bzw. des Kastenoberteils (4.4) die Hohlräume (10) einschließen.

6. Vorrichtung nach Anspruch 4 oder 5, dadurch gekennzeichnet, daß die Boden- und die Seitenwände des Kastenunterteils (4.1, 4.3) zur Bildung der Hohlräume (10) doppelwandig ausgebildet sind, wobei die innenseitigen Wände (4') den Brandschutzplatten (9) anliegen und mit den Austrittsöffnungen (11) der Brandschutzplatten (9) in Verbindung stehende Löcher (10') aufweisen.

7. Vorrichtung nach einem der Ansprüche 1 bis 6, dadurch gekennzeichnet, daß die Austrittsöffnungen (11) einen Verschluß aus einem in der Wärme schmelzenden Material aufweisen.

8. Vorrichtung nach einem der Ansprüche 1 bis 7, dadurch gekennzeichnet, daß außerhalb der Wandöffnung (2) auf einer Seite oder beiden Seiten der Wand (3) Zusatzbehältnisse (17) für das Brandschutzmittel vorgesehen sind, die so mit den Hohlräumen (10) in Verbindung stehen, daß das Brandschutzmittel aus den Zusatzbehältnissen (17) in die Hohlräume (10) nachströmen kann, wenn das Brandschutzmittel aus den Hohlräumen (10) in die Durchführungsöffnung (7) austritt.

9. Vorrichtung nach einem der Ansprüche 1 bis 8, dadurch gekennzeichnet, daß die Hohlräume (10), gegebenenfalls die Zusatzbehältnisse (17), an Verbindungsleitungen (20, 21) angeschlossen sind, die mit einem Vorratsgefäß oder einem Versorgungsnetz für das Brandschutzmittel in Verbindung steht.

10. Vorrichtung nach Anspruch 9, dadurch gekennzeichnet, daß im Fall eines in die Leitungspritsche (8) eingesetzten Kastenunterteils (4.3) die an dessen Hohlräumen (10) angeschlossene Verbindungsleitung (21) zusammen mit den die Durchführungsöffnung (7) durchlaufenden Leitungen in der Leitungspritsche (8) geführt ist.

11. Vorrichtung nach einem der Ansprüche 8 bis 10, dadurch gekennzeichnet, daß die Hohlräume (10) an die Zusatzbehältnisse (17) oder die Verbindungsleitungen (21) über Ventile (22) angeschlossen sind, die durch Brandmelder steuerbar sind.

12. Vorrichtung nach einem der Ansprüche 1 bis 8, dadurch gekennzeichnet, daß in den Hohlräumen (10) wenigstens eine Kammer (32) vorgesehen ist, aus der durch eigene Austrittsöffnungen (11) in der sie begrenzenden Brandschutzplatte (9) ein gasförmiges Brandschutzmittel in die Durchführungsöffnung (7) eingeblasen werden kann.

13. Vorrichtung nach Anspruch 12, dadurch gekennzeichnet, daß in der Kammer (32) ein Gebläse (33) zur Erzeugung der Gasströmung vorgesehen und der Gebläseantrieb (34) von einem Rauchgasmelder steuerbar ist.

14. Vorrichtung nach einem der Ansprüche 1 bis 13, dadurch gekennzeichnet, daß auf beiden Seiten der Wand (3) in die Durchführungsöffnung (7) hängende Schürzen (25) aus einem die Wärme gut leitenden Werkstoff vorgesehen sind, die mit ihrem unteren freien Rand auf den Leitungen liegen und die Durchführungsöffnung (7) in Leitungslängsrichtung nach außen abdecken.

15. Vorrichtung nach Anspruch 14, dadurch gekennzeichnet, daß die Schürzen (25) an ihrem unteren Rand zwischen die Leitungen fallende Fransen (26) tragen.

16. Vorrichtung nach den Ansprüchen 14 und 15, dadurch gekennzeichnet, daß die Schürzen (25) und Fransen (26) aus einem Kupferdrahtgewebe bestehen.

17. Vorrichtung nach einem der Ansprüche 14 bis 16, dadurch gekennzeichnet, daß die Schürzen (25) am oberen Rand (27) gelenkig aufgehängt und dadurch nach außen und aufwärts verschwenkbar sind.

18. Vorrichtung nach einem der Ansprüche 1 bis 17, dadurch gekennzeichnet, daß das Brandschutzmittel aus einer wässerigen Schlämme eines feinkörnigen festen Intumeszenzmaterials besteht.

19. Vorrichtung nach Anspruch 18, dadurch gekennzeichnet,daß das Brandschutzmittel Aluminiumhydroxid Al(OH)₃ enthält.

20. Vorrichtung nach einem der Ansprüche 1 bis 19, dadurch gekennzeichnet, daß in der Durchführungsöffnung (7) zwischen den Leitungen verlaufende, lose oder fest mit den Brandschutzplatten (9) verbundene Leisten (9') aus Intumeszenzmaterial angeordnet sind.

## Claims

1. Apparatus for the fire-resistant closure of a wall opening (2) for the passage of conduits such as electrical cables, pipes or the like through a wall (3), having a partitioning casing (4) which is arranged in the wall opening (2) in sealed relationship with the wall (3) and which forms a passage opening (7) for accommodating the conduits and which contains fire-protection plates (9) comprising intumescence material, which plates (9) increase their original volume under the effect of heat only in a fire situation and thereby close the passage opening (7), characterised in that the fire-protection plates (9) which are arranged substantially parallel to the soffit surfaces of the wall opening (2) form cavities (10) which are closed between the plates and the soffit surfaces and which communicate with the passage opening (7) through discharge openings (11) in the fire-protection plates (9) and contain a liquid and/or a gaseous fire-protection agent which in a fire situation passes prior to the fine-protection plates (9) foaming up through the discharge openings (11) into the passage opening (7).

2. Apparatus according to claim 1 characterised in that the fire-protection plates (9) form the two lateral boundary walls and the upper boundary wall of the passage opening (7) and enclose the cavities (10) between themselves and the corresponding walls of the partitioning casing (4).

3. Apparatus according to claim 2 characterised in that in the case of a conduit platform (8) which extends through the passage opening (7) the side walls thereof with the respectively adjacent fire-protection plate (9) forming the lateral boundary wall of the passage opening (7) form an open gap (13) into which discharge openings (11) of the fire-protection plate (9) also open.

4. Apparatus according to claim 1 characterised in that in the case of a conduit platform (8) which extends through the wall opening (2), the bottom and side walls thereof directly form in the region of the passage opening (7) a lower portion (4.1) of the partitioning casing (4), which is covered over upwardly by a casing upper portion (4.2), and that the fire-protection plates (9) which are provided on the inside of the casing lower portion (4.1) and the casing upper portion (4.2) enclose the cavities between themselves and the respectively corresponding wall of the casing lower portion (4.1) and the casing upper portion (4.2) respectively.

5. Apparatus according to claim 1 characterised in that in the case of a conduit platform (8) which extends through the wall opening (2) and which is sealed with its bottom and side walls relative to the wall (3) the partitioning casing (4) comprises a casing lower portion (4.3) which is fitted into the conduit platform (8) and which is sealed off relative to the walls thereof, and a casing upper portion (4.4) which covers over the conduit platform (8) and the casing lower portion (4.3) upwardly, and that the fire-protection plates (9) provided on the inside of the casing lower portion (4.3) and the casing upper portion (4.4) enclose the cavities (10) between themselves and the respectively corresponding wall of the casing lower portion (4.3) and the casing upper portion (4.4) respectively.

6. Apparatus according to claim 4 or claim 5 characterised in that the bottom and side walls of the casing lower portion (4.1, 4.3) are of a double-wall configuration to form the cavities (10), wherein the inward walls (4') bear against the fire-protection plates (9) and have holes (10') communicating with the discharge openings (11) in the fire-protection plates (9).

7. Apparatus according to one of claims 1 to 6 characterised in that the discharge openings (11) have a closure means comprising a material which melts in the heat.

8. Apparatus according to one of claims 1 to 7 characterised in that additional containers (17) for the fire-protection agent are provided outside the wall opening (2) on one side or both sides of the wall (3) and communicate with the cavities (10) in such a way that the fire-protection agent can flow as a make-up flow out of the additional containers (17) into the cavities (10) when the fire-protection agent discharges from the cavities (10) into the passage opening (7).

9. Apparatus according to one of claims 1 to 8 characterised in that the cavities (10), and possibly the additional containers (17), are connected to connecting conduits (20, 21) which communicate with a storage receptacle or a supply system for the fire-protection agent.

10. Apparatus according to claim 9 characterised in that in the case of a casing lower portion (4.3) which is fitted into the conduit platform (8), the connecting conduit (21) which is connected to the cavities (10) of the casing lower portion is guided together with the conduits passing through the passage opening (7) in the conduit platform (8).

11. Apparatus according to one of claims 8 to 10 characterised in that the cavities (10) are connected to the additional containers (17) or the connecting conduits (21) by way of valves (22) which are controllable by fire detectors.

12. Apparatus according to one of claims 1 to 8 characterised in that provided in the cavities (10) is at least one chamber (32) from which a gaseous fire-protection agent can be blown into the passage opening (7) through specific discharge openings (11) in the fire-protection plate (9) defining same.

13. Apparatus according to claim 12 characterised in that a blower (33) for producing the gas flow is provided in the chamber (32) and the blower drive (34) is controllable by a smoke detector.

14. Apparatus according to one of claims 1 to 13 characterised in that provided on both sides of the wall (3) are aprons (25) of a material which is a good conductor of heat, which aprons hang into the passage opening (7) and lie with their lower free edges on the conduits and cover over the passage opening (7) relative to the exterior in the longitudinal direction of the conduits.

15. Apparatus according to claim 14 characterised in that at their lower edges the aprons (25) bear fringes (26) which fall between the conduits.

16. Apparatus according to claims 14 and 15 characterised in that the aprons (25) and fringes (26) comprise a copper wire mesh.

17. Apparatus according to one of claims 14 to 16 characterised in that the aprons (25) are pivotably suspended at the upper edge (27) and are thereby pivotable outwardly and upwardly.

18. Apparatus according to one of claims 1 to 17 characterised in that the fire-protection agent comprises an aqueous slurry of a fine-grain solid intumescence material.

19. Apparatus according to claim 18 characterised in that the fire-protection agent contains aluminium hydroxide Al(OH)₃.

20. Apparatus according to one of claims 1 to 19 characterised in that disposed in the passage opening (7) are strips (9') of intumescence material which extend between the conduits and which are loosely or fixedly connected to the fire-protection plates (9).

## Revendications

1. Dispositif coupe-feu placé dans l'ouverture d'une paroi (2) pour la traversée de conduits tels que des câbles électriques, des tubes ou éléments similaires, à travers une paroi (3), avec un caisson de cloisonnement (4) disposé dans l'ouverture de paroi (2) et rendu étanche vis-à-vis de la paroi (3), caisson de cloisonnement qui forme une ouverture de traversée (7) recevant les conduits et qui contient des plaques coupe-feu (9) composées de matériau à intumescence et qui voient leur volume initial augmenter uniquement en cas d'incendie sous l'action de la chaleur et qui ferment ainsi l'ouverture de traversée (7), caractérisé en ce que les plaques coupe-feu (9), disposées pour l'essentiel parallèlement aux surfaces intérieures de l'ouverture de paroi (2), forment, entre elles-mêmes et les surfaces intérieures, des cavités fermées (10) qui communiquent avec l'ouverture de traversée (7) par des ouvertures de sortie (11) ménagées dans les plaques coupe-feu (9) et qui contiennent un matériau coupe-feu liquide et/ou gazeux qui, en cas d'incendie, pénètre, avant l'expansion des plaques coupe-feu (9), dans l'ouverture de traversée (7) à travers les ouvertures de sortie (11).

2. Dispositif selon la revendication 1, caractérisé en ce que les plaques coupe-feu (9) forment les deux parois de séparation latérales et la paroi de séparation supérieure de l'ouverture de traversée (7) et enferment les cavités (10) entre elles-mêmes et les parois correspondantes du caisson de cloisonnement (4).

3. Dispositif selon la revendication 2, caractérisé en ce que, dans le cas d'une tablette de conduits (8) traversant l'ouverture de traversée (7) et dont les parois latérales forment, avec chaque plaque coupe-feu voisine (9) qui constitue la paroi de séparation latérale de l'ouverture de traversée (7), un interstice ouvert (13) dans lequel débouchent également les ouvertures de sortie (11) de la plaque coupe-feu (9).

4. Dispositif selon la revendication 1, caractérisé en ce que, dans le cas d'une tablette de conduits (8) traversant l'ouverture de paroi (2), les parois de fond et latérales de cette tablette forment directement, dans la zone de l'ouverture de traversée (7), une partie inférieure (4.1) du caisson de cloisonnement (4) qui est couverte vers le haut par une partie supérieure de caisson (4.2) et en ce que les plaques coupe-feu (9) prévues sur le côté intérieur de la partie inférieure de caisson (4.1) comme de la partie supérieure de caisson (4.2) enferment les cavités entre elles-mêmes et chaque paroi paroi correspondante de la partie inférieure de caisson (4.1) ou de la partie supérieure de caisson (4.2).

5. Dispositif selon la revendication 1, caractérisé en ce que, dans le cas d'une tablette de conduits (8) traversant l'ouverture de paroi (2) et rendue étanche par ses parois de fond et latérales vis-à-vis de la paroi (3), le caisson de cloisonnement (4) se compose d'une partie inférieure de caisson (4.3) mise en place dans la tablette de conduits (8) et rendue étanche vis-à-vis des parois de la tablette et d'une partie supérieure de caisson (4.4) couvrant vers le haut la tablette de conduits (8) et la partie inférieure de caisson (4.3) et en ce que les plaques coupe-feu (9) prévues sur le côté intérieur de la partie inférieure de caisson (4.3) comme de la partie supérieure de caisson (4.4) enferment les cavités (10) entre elles-mêmes et chaque paroi correspondante de la partie inférieure de caisson (4.3) ou de la partie supérieure de caisson (4.4).

6. Dispositif selon la revendication 4 ou 5, caractérisé en ce que les parois de fond et les parois latérales de la partie inférieure de caisson (4.1, 4.3) sont réalisées à double coque pour la formation des cavités (10), les parois côté intérieur (4') étant attenantes aux plaques coupe-feu (9) et présentant des trous (10') communiquant avec les ouvertures de sortie (11) des plaques coupe-feu (9).

7. Dispositif selon l'une des revendications 1 à 6, caractérisé en ce que les ouvertures de sortie (11) présentent une fermeture réalisée dans un matériau fondant à la chaleur.

8. Dispositif selon l'une des revendications 1 à 7, caractérisé en ce que, en dehors de l'ouverture de paroi (2), des logements supplémentaires (17) sont prévus pour le matériau coupe-feu sur un côté ou sur les deux côtés de la paroi (3), logements supplémentaires qui communiquent avec les cavités (10) de telle façon que le produit coupe-feu peut s'écouler hors des logements supplémentaires (17) en direction des cavités (10) quand le produit coupe-feu sort des cavités (10) pour pénétrer dans l'ouverture de traversée (7).

9. Dispositif selon l'une des revendications 1 à 8, caractérisé en ce que les cavités (10) et éventuellement les logements supplémentaires (17) sont raccordés à des conduits de liaison (20, 21) qui communiquent avec un récipient de réserve ou avec un réseau d'alimentation en produit coupe-feu.

10. Dispositif selon la revendication 9, caractérisé en ce que, dans le cas d'une partie inférieure de caisson (4.3) mise en place dans la tablette de conduits (8), le conduit de liaison (21) raccordé aux cavités (10) de cette partie inférieure est conduit dans la tablette de conduits (8) en même temps que les conduits qui traversent l'ouverture de traversée (7).

11. Dispositif selon l'une des revendications 8 à 10, caractérisé en ce que les cavités (10) sont raccordées aux logements supplémentaires (17) ou aux conduits de liaison (21) par le biais de vannes (22) qui peuvent être pilotées par des avertisseurs d'incendie.

12. Dispositif selon l'une des revendications 1 à 8, caractérisé en ce que, dans les cavités (10), on prévoit au moins une chambre (32) à partir de laquelle, par des ouvertures de sortie spécifiques (11) ménagées dans la plaque coupe-feu (9) qui les délimite, on peut insuffler un produit coupe-feu gazeux dans l'ouverture de traversée (7).

13. Dispositif selon la revendications 12, caractérisé en ce que, dans la chambre (32), on prévoit un ventilateur (33) chargé de produire le flux gazeux et en ce que l'entraînement de ventilateur (34) peut être piloté par un avertisseur de fumées.

14. Dispositif selon l'une des revendications 1 à 13, caractérisé en ce que, sur les deux côtés de la paroi (3), on prévoit des tabliers (25) suspendus dans l'ouverture de traversée (7) réalisés dans un matériau bon conducteur de la chaleur, qui reposent sur les conduits par leur bord inférieur libre et qui couvrent vers l'extérieur l'ouverture de traversée (7) dans le sens de la longueur des conduits.

15. Dispositif selon la revendication 14, caractérisé en ce que les tabliers (25) portent, sur leur bord inférieur, des franges (26) tombant entre les conduits.

16. Dispositif selon les revendications 14 et 15, caractérisé en ce que les tabliers (25) et les franges (26) sont composés d'un tissu de fils de cuivre.

17. Dispositif selon l'une des revendications 14 à 16, caractérisé en ce que les tabliers (25) sont suspendus de façon articulée sur le bord supérieur (27) et peuvent ainsi être mis en pivotement vers l'extérieur et vers le haut.

18. Dispositif selon une des revendications 1 à 17, caractérisé en ce que le produit coupe-feu se compose d'un coulis aqueux d'un matériau à intumescence solide à grains fins.

19. Dispositif selon la revendications 18, caractérisé en ce que le produit coupe-feu contient de l'hydroxyde d'aluminium Al(OH)₃.

20. Dispositif selon l'une des revendications 1 à 19, caractérisé en ce que, dans l'ouverture de traversée (7), sont disposées des baguettes (9') en matériau à intumescence placées entre les conduits et raccordées aux plaques coupe-feu (9) de façon lâche ou ou bien de façon fixe.
